# EUROPEAN PATENT APPLICATION

(11) **EP 4 275 972 A1**
(43) Date of publication of application: **15.11.2023**
(21) Application number: 23170755.5
(22) Date of filing: 28.04.2023
(51) Int. Cl.: B60T 7/10, G05G 1/04, G05G 5/24, B62K 23/06, B62L 3/02

(54) **LEVER DEVICE FOR CONTROLLING THE PARKING BRAKE FOR MOTOR VEHICLES WITH HANDLEBAR**

(30) Priority: 09.05.2022 IT 202200009437
(71) Applicant: Domino S.r.l., 23896 Sirtori (LC) (IT)
(72) Inventor: LAMPARELLI, Luca, 20841 Carate Brianza (MB) (IT); LEVATI, Davide, 23885 Calco (LC) (IT)
(74) Representative: Ripamonti, Enrico

(57) **Abstract**

A device (1) for controlling the parking brake for a motor vehicle with handlebar comprises a box-like body (2) adapted to be constrained to the handlebar and which receives a cable (41) connected to the parking brake, from said box-like body (2) there protruding a lever (8) hinged (in 9) to the body and having a serrated end (13) inside the body adapted to cooperate with a rotary member (16) which is at least partly serrated (in 15) integrally joined with said cable (41), said rotary member (16) being adapted to be locked in a plurality of positions in said box-like body (2) following the movement of the lever (8) so as to actuate the parking brake, there being provided for an element for displaying such actuation.

## Description

Forming an object of the present invention is a device for controlling a parking brake of a motor vehicle with handlebar, according to the preamble of the main claim. A device for controlling a brake as described in the preamble of the main claim is disclosed in DE19510782A1.

As known, in a motor vehicle, there is usually present a parking brake. The expression "motor vehicle with handlebar" is used to indicate a two- or three-wheeled motorcycle, a scooter, a snowmobile or the like, the control of the parking brake is obtained mechanically, through a lever suitably provided on the vehicle or through a button arranged on the handlebar.

With particular reference to electric motor vehicles with automatic transmission, to scooters with variator transmission and similar transportation means, it is known that - for obvious reasons - they do not have clutch levers for changing ratio or shifting gears of the engine associated with the handlebar. In these vehicles, for regulatory or comfort reasons, the control of the parking brake is obtained through a manual lever (in case of mechanical actuation) similar to those used in cars or, in case of electric actuation, through a button which acts on an electrical member which provides for acting on a usual parking brake control lever so as to actuate or engage the latter.

Such mechanical and electrical solutions reveal various drawbacks: when using the manual lever there is usually no indication of the fact that such levers are in the parking brake actuated or disengaged status; furthermore, the mechanical stroke ratio which can be obtained with a standard lever is not adapted to actuate medium- or large-size braking callipers for the function of the parking brake in the aforementioned electric vehicles, both in terms of stroke (greater than 20 mm) and maximum approval force on the hand of the rider (smaller than 250N).

Therefore, there arises the need for an improved lever device for the actuation of a parking brake, that is simple to obtain and, above all, use on any electric vehicle or handlebar.

Therefore, an object of the present invention is to provide a lever device of the aforementioned type that meets such need.

In particular, an object of the present invention is to provide a lever device of the aforementioned type that allows the actuation of parking brakes acting with medium- or large-size braking members (callipers) without the user applying a high force to move the lever.

Another object is to provide a lever device for the engagement or release of the parking brake in an electric drive vehicle with handlebar wherein such lever can be easily reached by the rider.

Another object is to provide a device of the aforementioned type which has the possibility of indicating to the rider of the motor vehicle with handlebar whether or not the parking brake is engaged (or actuated).

These and other objects which will be more apparent to the man skilled in the art are attained by a lever device according to the attached main claim.

For a better understanding of the present invention, the following drawings are attached hereto, purely by way of non-limiting example, wherein:
figure 1 shows a perspective view of the lever device according to the invention;

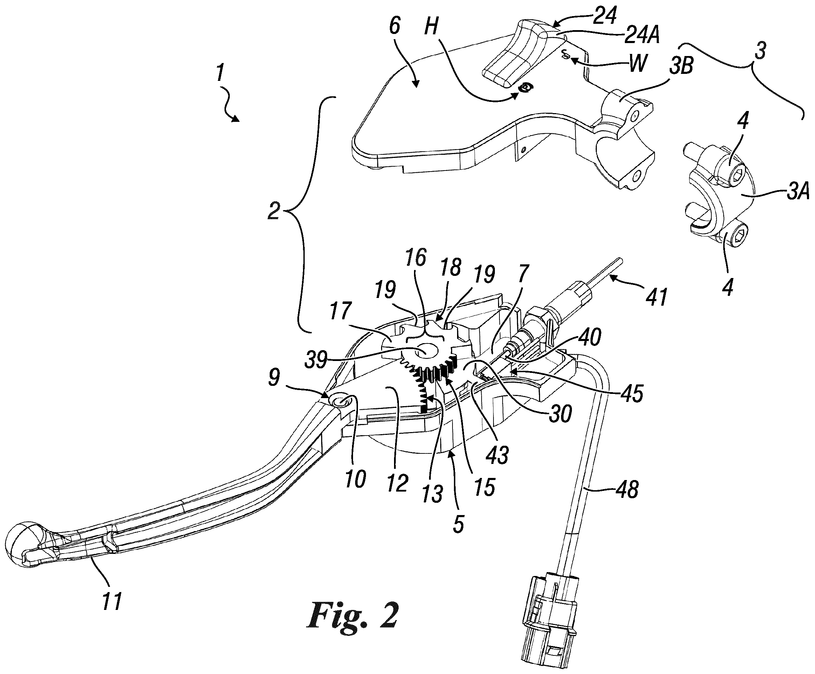

figure 2 shows a partially exploded top perspective view of the lever device of figure 1;
figure 3 shows a partially exploded bottom perspective view of the lever device of figure 1;

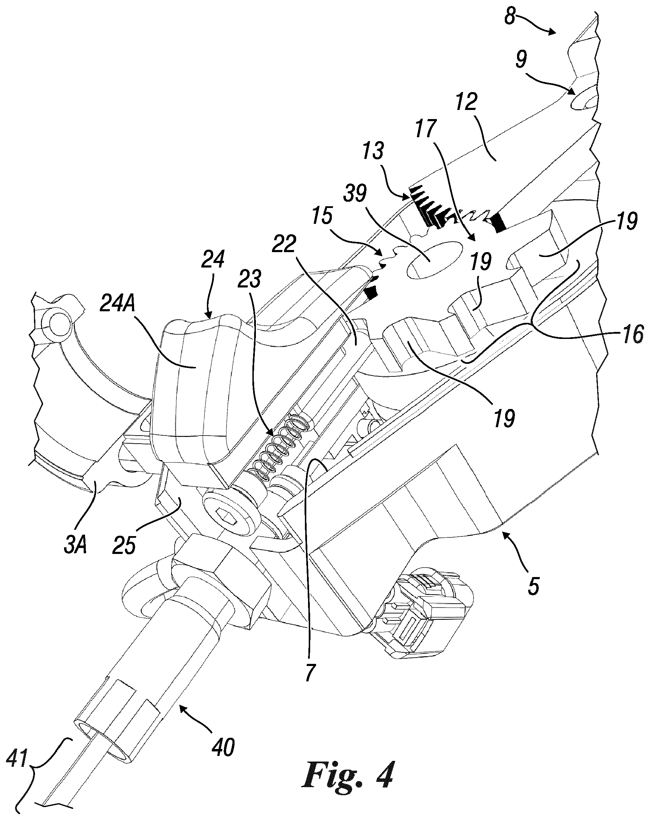

figure 4 shows an enlarged view, perspective from one side, of the device of figure 1 with a part removed for greater clarity;
figure 5 shows an enlarged perspective view of some components of the lever device of figure 1.

With reference to the aforementioned drawings, a lever device for manually controlling the engagement or disengagement of a parking brake, (not shown) in a motor vehicle with a handlebar (also not shown), in particular a vehicle with electric motor such as a two- or three-wheeled motorcycle, a snowmobile, a personal watercraft or the like is shown in the attached figures, and it is indicated with 1.

Such device comprises a box-like body 2 adapted to be coupled - using a clamp 3 - to a common handlebar of the vehicle (not shown). The clamp 3 comprises a movable 3A and a fixed 3B part integrally joined with said box-like body 2. Such parts are adapted to be fastened to each other using screws 4.

The box-like body 2 comprises a first part 5 and a second part 6. The first part 5 has a cavity 7 adapted to be enclosed by the second part 6. The first part, in the solution of the figures, supports the fixed part 3B of the clamp 3.

From the box-like body 2 there protrudes a lever 8 whose actuation, by the rider of the vehicle mentioned above, allows at least to manually engage the parking brake. In 9, the lever 8 is pivoted to the box-like body 2 on a pin 10.

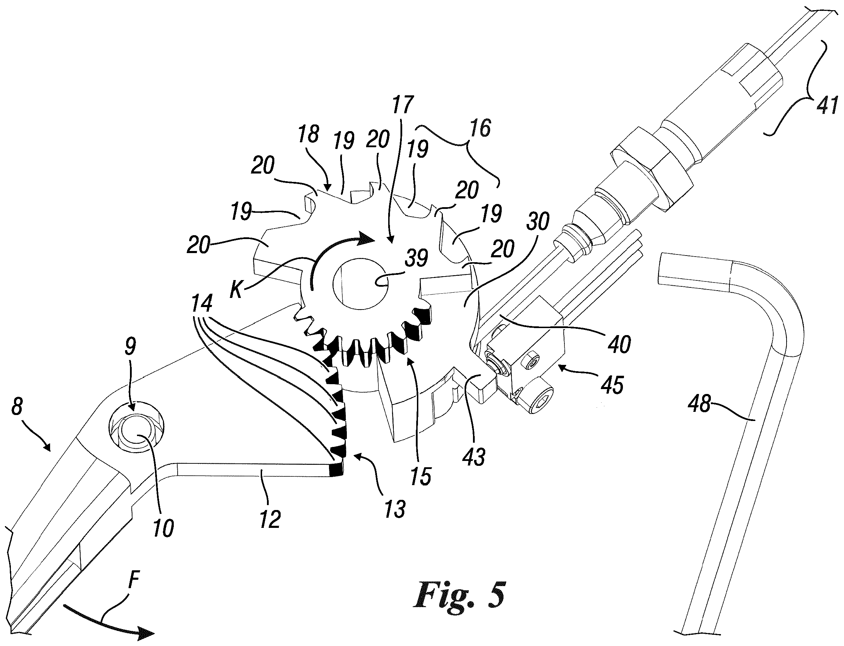

The lever 8 has a first end 11 outside the box-like body 2 and a second end 12 inside such body, said second end being with a circle section and having a first serrated edge 13 with serration 14. This serration is adapted to cooperate with a serrated section 15 of a rotary member 16 contained in the cavity 7 of the first part 5 of the box-like body 2. Such rotary member may rotate in the clockwise direction (with reference to figure 5, for example as indicated by the arrow K) so as to engage the parking brake, as described hereinafter.

The rotary member 16 comprises two portions integrally joined together but superimposed on each other. A first portion 17 has the serrated section 15 and it always meshes with at least part of the serration 14 of the serrated edge 13 of the lever 8; such first portion 17 has the remainder of the edge or second edge 18 provided with recesses 19 delimited by arms 20 inclined in the anticlockwise direction (when the device is mounted on the handlebar) that is in the direction opposite to the direction of rotation of the rotary member 16 with which the parking brake can be engaged or actuated (arrow F of figure 5).

The recesses 19 are adapted to cooperate with a pin 22 movable with a counteracting spring 23 and integrally joined (as a single piece) with a slider 24 slidable in a slot 25 provided for in the second part 6 of the box-like body 2. Such slider can be moved (counteracting against the above-mentioned spring 23 acting on the pin 22) by the rider of the vehicle above such part 6 so as to release the pin 22 inserted into a corresponding recess 19 and make it exit from the latter. This releases the rotation of the member 16 and therefore of the lever 8 around the pin 10.

The rotary member 16 has a second portion 30 which supports the first portion 17 and inserted in-depth into the recess 7 of the first part 5 of the box-like body 2. Such second portion 30 has a bottom part 32 (opposite to the first portion 17) provided with a protruding pin 33, drilled in 34, adapted to be arranged at a hole 35 of the first part 5. Coaxially to such holes 34, 35 there is present a hole 36 of a pin 37 (threaded) protruding from the second part 6 of the box-like body and inserted into a hole 39 of the rotary member 16. A screw (not shown) arranged in said holes 34, 35 and 36, constrains the portions 5 and 6 and encloses the box-like body 2.

To the rotary member 16 there is integrally joined an end 40 of a cable (Bowden) 41 connected to an actuator of the parking brake calliper (not shown).

Such rotary member 16 also has a fin 43 protruding from the second portion 30 adapted to cooperate with a microswitch 45 when the parking brake is not engaged, said microswitch being inserted into the body 2 and being connected to the control unit of the vehicle by means of a wire 48.

Thanks to the invention, the rider can engage the parking brake simply by acting on a lever (lever 8) arranged on the handlebar in a position that is easy to reach and with usual movements for a rider riding a motor vehicle provided with a handlebar, such as for example a motorcycle or a snowmobile. Furthermore, such intervention for engaging the brake does not require great force by the rider: this is obtained by providing the serrated edge 13 and the serrated section 15 with an appropriate number of teeth which allows a multiplier ratio - in the cooperation thereof - so as to be able to actuate the brake callipers of relatively significant size. For example, such ratio may be 1/3 or 1/5, providing for the serrated edge 13 broader than the serrated section 15. In this manner, with a limited stroke of the lever, the rider exerts even a relatively significant force on the brake.

It should be observed that the size of the serrated sections 13 and 15 is calculated starting from the usual maximum force required to actuate a disc brake for example of a motorcycle (or similar vehicle). Such force is calculated as 450N.

The lever 8 may be arranged in four different positions during the stroke thereof (according to the arrow F of figure 5) as a function of the force required to actuate or engage the parking brake. The first position is the one indicated in the figures, where the fin 43 contacts the microswitch 45. In order to fully actuate a parking brake, one has to exert - on the lever - at least a force of about 200N; the lever locks automatically in the position useful to engage the brake: when this happens, the lever 8 cannot rotate around the pin 10, while the pin 22 is inserted into a corresponding recess 19.

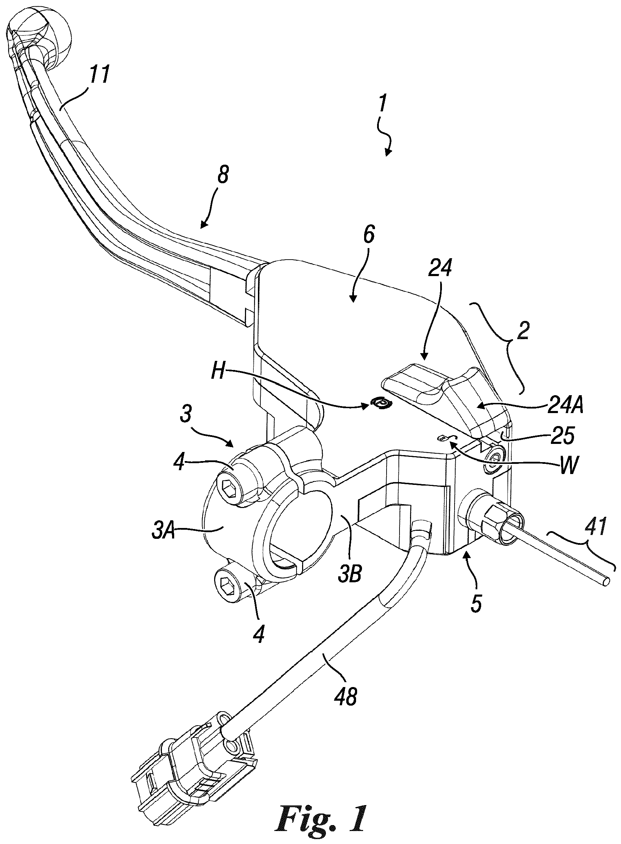

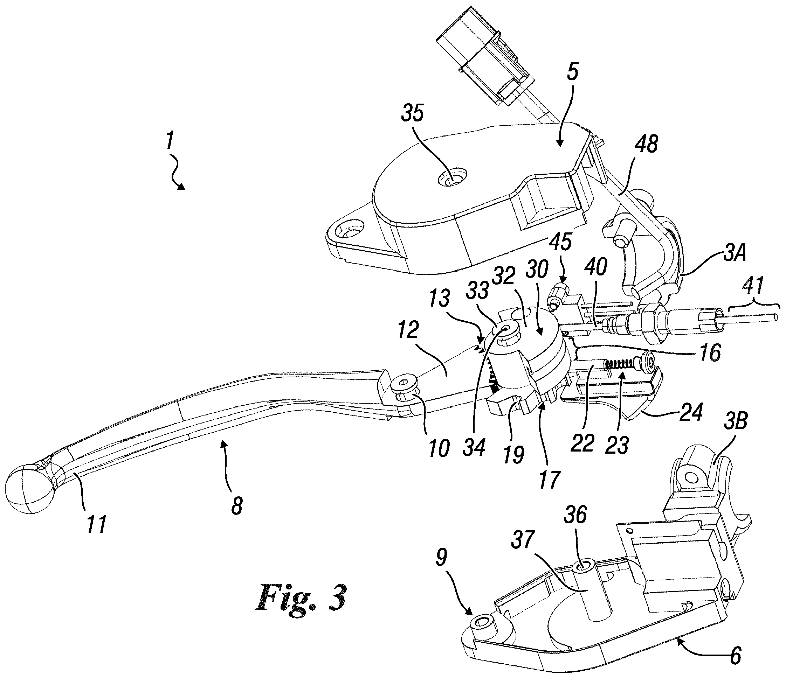

In such moment, the slider 24 is positioned in a point such to indicate, with a raised end 24A thereof, the brake engaged position (see symbol H in figures 1 and 3); when the brake is disengaged, such end 24A is at a corresponding symbol, indicated with W in the figures, which indicates the disengagement of the parking brake (like in the attached figures).

In order to release the brake, it suffices to move the slider in the slot 25 to move the raised end 24A thereof to the position of the figures and rotate the lever 8. Advantageously, this can be automatically obtained thanks to an elastic element usually present in the brake calliper.

The invention provides a device that is simple to implement to engage the parking brake and that is intuitive to use by the rider.

A preferred embodiment of the invention has been described above; however, others are possible so as to provide a lever device for controlling the engagement (or disengagement) of the parking brake of a motor vehicle with handlebar with the characteristics indicated in the claims that follow.

## Claims

1. Device for manually controlling the engagement of a parking brake of a motor vehicle provided with a handlebar, said device (1) comprising a lever (8) adapted to control such engagement through a cable (41) connected to the aforementioned brake, **characterised in that** said lever (8) is associated with a box-like body (2) fixed to the handlebar, the lever (8) having a first end (11) outside such box-like body (2) and a second end (12) inside such box-like body (2), said second end (12) being engaged with a rotary member (16) inserted into the aforementioned box-like body (2) connected to said cable (41) and which can be locked in at least one position in which such cable engages the parking brake.

2. Device according to claim 1, **characterised in that** the second end (12) of the lever (8) is shaped with serrated edge (13) with serration (14) adapted to be engaged with a corresponding serrated section (15) of the rotary member (16) .

3. Device according to claim 2, **characterised in that** between the serrated edge(13) and the serrated section (15) of the rotary member there is a multiplier ratio comprised between 1/3 and 1/5, the serrated edge (13) being broader than the serrated section (15).

4. Device according to claim 1, **characterised in that** said rotary member (16) comprises an edge (18) provided with recesses (19) adapted to cooperate with an element (22) for locking the engagement of the parking brake, subjected to a spring (23) and integrally joined with an element (24) for controlling and displaying the status of the parking brake, engaged or locked, slidable on said box-like body (2).

5. Device according to claim 4, **characterised in that** said locking element is a pin (22) integrally joined with the control and display element (24) and inserted into the box-like body (2), such control and display device (24) being a slider movable on said box-like body, said slider cooperating with elements (H, W) adapted to display, through the position of the slider on the box-like body, the status of the parking brake.

6. Device according to claim 5, **characterised in that** said slider has a raised part (24A) adapted to cooperate with the elements (H, W) adapted to display the status of the parking brake.

7. Device according to claim 4, **characterised in that** said recesses (19) are delimited by arms (20) inclined in the direction opposite to the rotation direction of the rotary member (16) to engage the parking brake.

8. Device according to claim 1, **characterised in that** said rotary member (16) cooperates with a microswitch when the parking brake is deactivated or disengaged.
